# EUROPEAN PATENT APPLICATION

(11) **EP 4 503 274 A1**
(43) Date of publication of application: **05.02.2025**
(21) Application number: 23887789.8
(22) Date of filing: 26.10.2023
(51) Int. Cl.: H01M 50/105

(54) **BATTERY**

(30) Priority: 09.11.2022 CN 202222985279 U
(71) Applicant: Zhuhai Cosmx Power Co., Ltd., Zhuhai, Guangdong 519180 (CN)
(72) Inventor: YANG, Jianhua, Zhuhai, Guangdong 519180 (CN); LUO, Zihao, Zhuhai, Guangdong 519180 (CN)
(74) Representative: Elzaburu S.L.P.
(86) International application number: PCT/CN2023/126947
(87) International publication number: WO 2024/099099

(57) **Abstract**

Provided is a battery, which relates to the field of battery cell packaging technology and is used for solving the technical problems of low packaging efficiency and poor packaging effect. The battery includes a battery cell and a packaging structure covered around the periphery of the battery cell, the packaging structure includes a first packaging sheet and a second packaging sheet, which are attached to first and second peripheral surfaces of the battery cell respectively, the first peripheral surface intersects with the second peripheral surface, and the first peripheral surface is arranged with a positive tab and a negative tab; the second packaging sheet has a bonding area and a non-bonding area which are adjacent to each other, the non-bonding area is located at the edge of the second packaging sheet close to the first packaging sheet and can be close to or away from the second peripheral surface. The battery provided exposes the intersection of the first peripheral surface and the second peripheral surface by moving the non-bonding area away from the second peripheral surface, so that the battery component can be smoothly assembled on the first peripheral surface, thereby ensuring the packaging efficiency and packaging effect.

## Description

The present application claims priority to Chinese Patent Application No. 202222985279.6, filed with China National Intellectual Property Administration on November 9, 2022, and entitled "BATTERY", the content of which is hereby incorporated by reference in its entirety.

### TECHNICAL FIELD

The present application relates to the technical field of battery cell packaging, and in particular to a battery.

### BACKGROUND

Lithium batteries have the advantages of high energy density, long life, and high energy retention rate. Lithium batteries include soft-pack lithium batteries, which refer to a battery with a polymer shell covering the outside of the battery cell, where the polymer shell is an aluminum-laminated film, and the sealing of the battery cell is achieved by packaging with the aluminum-laminated film.

In the related art, the battery cell includes a peripheral surface with positive and negative tabs and other peripheral surfaces. The packaging of the battery cell by aluminum-laminated film includes: bonding the aluminum-laminated film to the other peripheral surfaces of the battery cell to achieve the packaging of the other peripheral surfaces; then assembling battery components such as a battery cell insulating glue layer and a battery cell protection plate to the peripheral surface with the positive and negative tabs; and after the assembling is completed, continuing to bond the aluminum-laminated film to the peripheral surface with the positive and negative tabs to complete the packaging of the battery cell.

However, when assembling the battery components, the packaging films bonded to other peripheral surfaces will create obstacles, affecting the packaging efficiency and packaging effect.

### SUMMARY

In view of the above problems, embodiments of the present application provide a battery, whose packaging structure can ensure packaging efficiency and packaging effect.

In order to achieve the above objective, embodiments of the present application provide the following technical solutions.

An embodiment of the present application provides a battery, including a battery cell and a packaging structure covered around a periphery of the battery cell, where the packaging structure includes a first packaging sheet and a second packaging sheet, and the first packaging sheet is attached to the first peripheral surface of the battery cell, the second packaging sheet is attached to the second peripheral surface of the battery cell, the first peripheral surface intersects with the second peripheral surface, and the first peripheral surface is arranged with a positive tab and a negative tab; the second packaging sheet has a bonding area and a non-bonding area which are adjacent to each other, and the non-bonding area is located at an edge of the second packaging sheet close to the first packaging sheet.

In a possible implementation, in a direction from the second packaging sheet to the first packaging sheet, a length of the non-bonding area is 5-8 mm.

In a possible implementation, in the direction from the second packaging sheet toward the first packaging sheet, the second packaging sheet extends toward the first packaging sheet and extends beyond the second peripheral surface.

In a possible implementation, the battery further includes a connecting glue layer, and the connecting glue layer is arranged between the bonding area of the second packaging sheet and the second peripheral surface.

In a possible implementation, the first packaging sheet is provided with a first through hole matching the positive tab, and a second through hole matching the negative tab; a periphery of the positive tab is provided with a positive tab insulating glue layer, and a periphery of the negative tab is provided with a negative tab insulating glue layer, the positive tab insulating glue layer is in contact with a hole wall of the first through hole, and the negative tab insulating glue layer is in contact with a hole wall of the second through hole.

In a possible implementation, the battery also includes a battery cell insulating glue layer, a battery cell protection plate and a heat dissipation glue layer. The battery cell insulating glue layer, the battery cell protection plate and the heat dissipation glue layer are all located between the first peripheral surface and the first packaging sheet, the battery cell insulating glue layer is attached to the first peripheral surface, the heat dissipation glue layer is attached to the battery cell protection plate, and the battery cell protection plate is located between the battery cell insulating glue layer and the heat dissipation glue layer; a positive electrode of the battery cell protection plate is electrically connected to the positive tab, and a negative electrode of the battery cell protection plate is electrically connected to the negative tab.

In a possible implementation, the battery further includes a temperature detection element, one end of the temperature detection element is welded to the battery cell protection plate, and the other end of the temperature detection element is configured to detect a temperature of the battery cell.

In a possible implementation, the temperature detection element includes a negative temperature coefficient thermistor.

In a possible implementation, the battery further includes a fixing glue layer, and the fixing glue layer is connected to both the temperature detection element and the battery cell insulating glue layer.

In a possible implementation, the first packaging sheet includes a top packaging sheet and a bottom packaging sheet, the first peripheral surface includes a top peripheral surface and a bottom peripheral surface that are arranged oppositely, the top peripheral surface is arranged with the positive tab, and the bottom peripheral surface is arranged with the negative tab; the top packaging sheet is attached to the top peripheral surface, and the bottom packaging sheet is attached to the bottom peripheral surface; the non-bonding area includes a first non-bonding area and a second non-bonding area, the first non-bonding area is located at an edge of the second packaging sheet close to the top packaging sheet, the second non-bonding area is located at an edge of the second packaging sheet close to the bottom packaging sheet, and the bonding area is located between the first non-bonding area and the second non-bonding area.

A battery provided in an embodiment of the present application has a packaging structure in which its first packaging sheet is attached to a first peripheral surface of a battery cell, a second packaging sheet is attached to a second peripheral surface of the battery cell, the first peripheral surface intersects with the second peripheral surface, and the first peripheral surface is arranged with a positive tab and a negative tab; the second packaging sheet has a bonding area and a non-bonding area which are adjacent to each other, the non-bonding area is located at an edge of the second packaging sheet close to the first packaging sheet, and the non-bonding area can be close to or away from the second peripheral surface; when the packaging of the second peripheral surface and a third peripheral surface is completed and the battery component is assembled to the first peripheral surface, the intersection of the first peripheral surface and the second peripheral surface is exposed by moving the non-bonding area away from the second peripheral surface, so that the battery component can be smoothly assembled on the first peripheral surface, thereby ensuring the packaging efficiency and packaging effect.

### BRIEF DESCRIPTION OF DRAWINGS

In order to more clearly illustrate the technical solutions in the embodiments of the present application or in the prior art, the drawings required for use in the description of the embodiments or the prior art will be briefly introduced below. It is obvious that the drawings described below are some embodiments of the present application. For persons of ordinary skill in the field, other drawings can also be obtained based on these drawings without any creative work.
FIG. 1 is a first schematic structural diagram of a battery according to an embodiment of the present application.
FIG. 2 is a schematic structural diagram of a battery cell according to an embodiment of the present application.
FIG. 3 is a second schematic structural diagram of a battery according to an embodiment of the present application.
FIG. 4 is a third schematic structural diagram of a battery according to an embodiment of the present application.

Illustration of reference signs:
100: first packaging sheet; 200: second packaging sheet; 110: third packaging sheet; 201: left packaging sheet; 202: right packaging sheet; 210: non-bonding area; 220: bonding area; 300: battery cell; 301: first peripheral surface; 302: second peripheral surface; 303: positive tab; 304: negative tab; 310: third peripheral surface; 305: positive tab insulating glue layer; 306: negative tab insulating glue layer; 3021: left peripheral surface; 3022: right peripheral surface; 400: battery cell insulating glue layer; 401: third through hole; 402: fourth through hole; 500: battery cell protection plate; 600: heat dissipation glue layer; 700: temperature detection element; 701: connection terminal; 702: temperature measurement terminal; 800: fixing glue layer; 900: connecting glue layer.

### DESCRIPTION OF EMBODIMENTS

As described in the background technology, the soft-pack lithium battery in the related technology has the problems of low packaging efficiency and poor packaging effect during production. The technical personnel have found that the reason for this problem is that the production process of the soft-pack lithium battery includes: punching out a groove matching the battery cell on the aluminum-laminated film to obtain a formed aluminum-laminated film, where the battery cell includes a side peripheral surface, a top peripheral surface and a bottom peripheral surface, the top peripheral surface and the bottom peripheral surface are oppositely arranged, the two ends of the side peripheral surface intersect with the top peripheral surface and the bottom peripheral surface respectively, and the top peripheral surface is provided with a positive tab and a negative tab; placing the battery cell in the groove of the formed aluminum-laminated film, and closing the formed aluminum-laminated film towards the side peripheral surface and bottom peripheral surface to achieve the packaging of side peripheral surface packaging and the packaging of bottom peripheral surface of the battery cell; then assembling the battery cell insulating glue layer, the battery cell protection plate and other battery components in sequence toward the top peripheral surface; and after the assembling is completed, continuing to close the formed aluminum-laminated film toward the top peripheral surface to complete the packaging of the battery cell. However, when assembling the battery cell insulating glue layer toward the top peripheral surface, the intersection of the side peripheral surface and the top peripheral surface is occupied by the aluminum-laminated film packaged on the side peripheral surface, which will hinder the assembling of the battery cell insulating glue layer and affect the packaging efficiency and packaging effect.

As for the above technical problems, an embodiment of the present application provides a battery, in which a first packaging sheet of a packaging structure is attached to a first peripheral surface of the battery cell, and a second packaging sheet is attached to a second peripheral surface of the battery cell. The second packaging sheet has a non-bonding area, and the non-bonding area can be close to or away from the second peripheral surface; the first peripheral surface is arranged with a positive tab and a negative tab; when a battery cell insulating glue layer is assembled to the first peripheral surface, the non-bonding area is away from the second peripheral surface to expose the intersection of the first peripheral surface and the second peripheral surface, so that the battery cell insulating glue layer can be smoothly assembled to the first peripheral surface, thereby ensuring the packaging efficiency and packaging effect.

In order to make the above-mentioned purposes, features and advantages of the embodiments of the present application more obvious and easy to understand, the technical solutions in the embodiments of the present application will be clearly and completely described below in conjunction with the drawings in the embodiments of the present application. Obviously, the described embodiments are only part of the embodiments of the present application, rather than all the embodiments. Based on the embodiments in this application, all other embodiments obtained by those skilled in the art without doing any creative work shall fall within the scope of protection of this application.

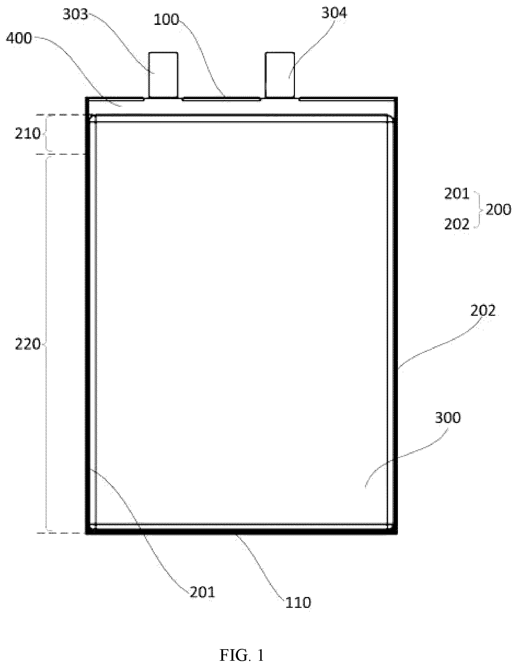

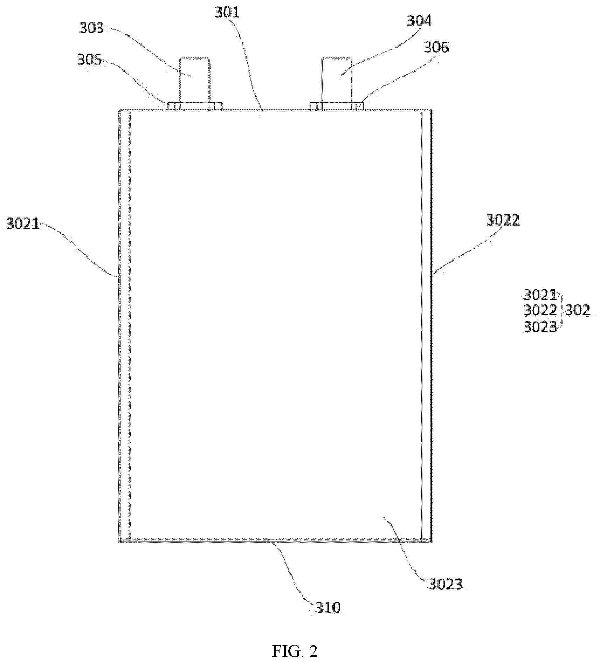

An embodiment of the present application provides a battery. Referring to FIG. 1 and FIG. 2, FIG. 1 is a schematic structural diagram of the battery, and FIG. 2 is a schematic structural diagram of a battery cell. The battery includes a battery cell 300 and a packaging structure, the packaging structure being attached to the periphery of the battery cell 300 to seal the battery cell 300; the battery cell 300 includes a first peripheral surface 301, a second peripheral surface 302, and a third peripheral surface 310, the first peripheral surface 301 and the third peripheral surface 310 are arranged opposite to each other in a vertical direction shown in FIG. 1, the second peripheral surface 302 is located between the first peripheral surface 301 and the third peripheral surface 310, and both ends of the second peripheral surface 302 intersect the first peripheral surface 301 and the third peripheral surface 310, respectively. The second peripheral surface 302 may include a front peripheral surface 3023 and a back peripheral surface which are oppositely arranged along a direction perpendicular to a paper plane shown in FIG. 1, and a left peripheral surface 3021 and a right peripheral surface 3022 which are oppositely arranged along a direction parallel to the paper plane shown in FIG. 1.

That is, the first peripheral surface 301 may be a top peripheral surface, the third peripheral surface 310 may be a bottom peripheral surface, and the second peripheral surface 302 may be a side peripheral surface;

The first peripheral surface 301 is arranged with a positive tab 303 and a negative tab 304.

The packaging structure includes a first packaging sheet 100 and a second packaging sheet 200. The first packaging sheet 100 is attached to the first peripheral surface 301, and the second packaging sheet 200 is attached to the second peripheral surface 302. The second packaging sheet 200 has a bonding area 220 and a non-bonding area 210, which are adjacent to each other. The bonding area 220 can make the second packaging sheet 200 firmly attached to the second peripheral surface 302; the non-bonding area 210 is located at the edge of the second packaging sheet 200 close to the first packaging sheet 100, and is not firmly attached to the second peripheral surface 302. When the non-bonding area 210 of the second packaging sheet 200 is moved, the non-bonding area 210 can be close to or away from the second peripheral surface 302 (the non-bonding area 210 shown in FIG. 1 can be swung left and right).

The packaging structure may further include a third packaging sheet 110, and the third packaging sheet 110 is attached to the third peripheral surface 310 to complete the packaging of the battery cell 300.

In the battery according to the embodiment of the present application, the first packaging sheet 100 of the packaging structure is attached to the first peripheral surface 301 of the battery cell 300, and the second packaging sheet 200 of the packaging structure is attached to the second peripheral surface 302 of the battery cell 300. The first peripheral surface 301 intersects with the second peripheral surface 302. The first peripheral surface 301 is arranged with a positive tab 303 and a negative tab 304. The second packaging sheet 200 has a bonding area 220 and a non-bonding area 210, which are adjacent to each other. The non-bonding area 210 is located at an edge of the second packaging sheet 200 close to the first packaging sheet 100, and the non-bonding area 210 can be close to or away from the second peripheral surface 302. When the packaging of the second peripheral surface 302 and the third peripheral surface 310 is completed and the battery component is assembled to the first peripheral surface 301, the intersection of the first peripheral surface 301 and the second peripheral surface 302 is exposed by moving the non-bonding area 210 away from the second peripheral surface 302, so that the battery component can be smoothly assembled to the first peripheral surface 301, thereby ensuring the packaging efficiency and packaging effect.

It should be noted that after the battery component is successfully assembled to the first peripheral surface 301, the first packaging sheet 100 is attached to the first peripheral surface 301 of the battery cell 300 to complete the packaging of the battery cell 300.

It should also be noted that the periphery of the positive tab 303 is provided with a positive tab insulating glue layer 305, and the periphery of the negative tab 304 is provided with a negative tab insulating glue layer 306. The first packaging sheet 100 has a first through hole (not shown in the figure) and a second through hole (not shown in the figure), the first through hole is configured to match the positive tab 303, and the second through hole is configured to match the negative tab 304. When the first packaging sheet 100 is attached toward the first peripheral surface 301 of the battery cell 300, the positive tab 303 passes through the first packaging sheet 100 via the first through hole, and the negative tab 304 passes through the first packaging sheet 100 via the second through hole. At the same time, the hole wall of the first through hole will come into contact with the positive tab insulating glue layer 305, and the hole wall of the second through hole will come into contact with the negative tab insulating glue layer 306. When the first packaging sheet 100 is packaged on the first peripheral surface 301 of the battery cell 300 by hot pressing, the hole wall of the first through hole can be bonded to the positive tab insulating glue layer 305, and the hole wall of the second through hole can also be bonded to the negative tab insulating glue layer 306, thereby ensuring the sealing effect.

In the embodiment of the present application, the packaging structure is attached to the periphery of the battery cell 300. The battery cell 300 may be a cylindrical battery cell or a square battery cell. The battery of the embodiment of the present application will be described in detail below using a square battery cell as an example.

The first peripheral surface 301 of the battery cell 300 is the top peripheral surface, the third peripheral surface 310 is the bottom peripheral surface, the second peripheral surface 302 is the side peripheral surface, and the second peripheral surface 302 also includes a front peripheral surface 3023 and a back peripheral surface (not shown in FIG. 2) which are oppositely arranged along a first direction (a direction perpendicular to the paper plane shown in FIG. 2), and a left peripheral surface 3021 and a right peripheral surface 3022 which are oppositely arranged along a second direction (a direction parallel to the paper plane shown in FIG. 2).

When the battery cell 300 are packaged, a groove matching the battery cell 300 can be first punched out on the overall packaging sheet (aluminum-laminated film) to obtain a formed overall packaging sheet; then the battery cell 300 is placed in the groove, the back peripheral surface of the battery cell 300 contacts with the bottom of the groove, and the front peripheral surface 3023 of the battery cell 300 is exposed through the notch of the groove; the formed overall packaging sheet is closed from the third peripheral surface 310 to the front peripheral surface 3023, so as to realize the packaging of the front peripheral surface 3023, the back peripheral surface and the third peripheral surface 310 of the battery cell 300; then the formed overall packaging sheet is continued to close from the left peripheral surface 3021 and the right peripheral surface 3022 for completing the packaging of the left peripheral surface 3021 and the right peripheral surface 3022.

At this point, the packaging of the third peripheral surface 310 and the second peripheral surface 302 is completed.

The second packaging sheet 200 includes a front packaging sheet, a back packaging sheet, a left packaging sheet 201 and a right packaging sheet 202. The front packaging sheet and back packaging sheet are each only provided with the bonding area 220 to ensure the sealing and bonding effect of the front packaging sheet and the back packaging sheet; the left packaging sheet 201 and the right packaging sheet 202 both have adjacent bonding area 220 and non-bonding area 210.

Before packaging the first peripheral surface 301 of the battery cell 300, the battery component is first assembled toward the first peripheral surface 301; during the assembling process, the non-bonding areas 210 of the left packaging sheet 201 and the right packaging sheet 202 are moved to make the left packaging sheet 201 away from the left peripheral surface 3021 and the right packaging sheet 202 away from the right peripheral surface 3022 for giving way, so as to ensure that the battery components can be assembled smoothly. Finally, the formed overall packaging sheet continues to be closed from the first peripheral surface 301, completing the packaging of the battery cell 300.

In the embodiment of the present application, in the direction from the second packaging sheet 200 to the first packaging sheet 100 (the vertical direction shown in FIG. 1), the length of the non-bonding area 210 is 5-8 mm. Since the second packaging sheet 200 has a certain hardness, when the length of the non-bonding area 210 is greater than 5 mm, the technician can flick the non-bonding area 210; and when the length of the non-bonding area 210 is less than 5 mm, it is difficult for the technician to flick the non-bonding area 210; when the length of the non-bonding area 210 is within 8 mm, the non-bonding area 210 will not be easily flipped open, thereby ensuring the packaging effect and the sealing performance after packaging; when the length of the non-bonding area 210 is greater than 8 mm, the non-bonding area 210 will be easily flipped open due to external force, and the packaging effect cannot be guaranteed.

Optionally, the length of the non-bonding area 210 is 6 mm.

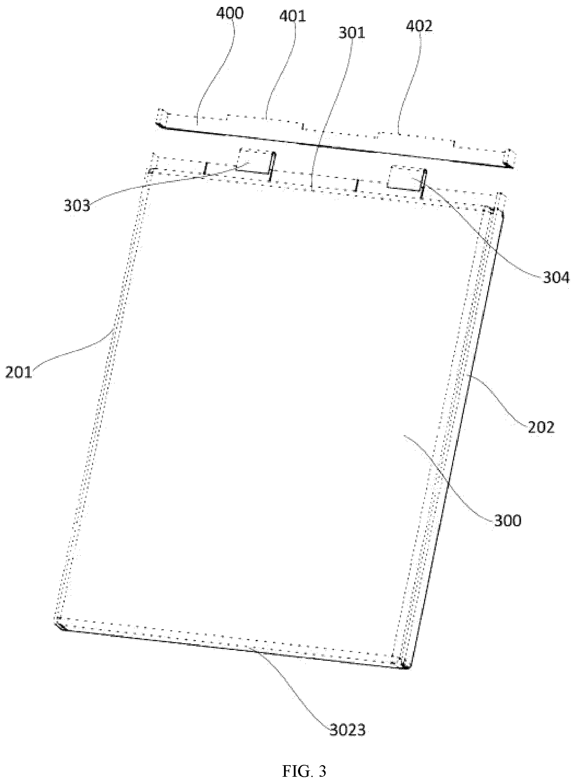

Please refer to FIG. 3, which is a schematic structural diagram of the battery. In the embodiment of the present application, in the direction in which the second packaging sheet 200 faces the first packaging sheet 100 (the vertical direction shown in FIG. 1), the second packaging sheet 200 extends toward the first packaging sheet 100 and extends beyond the second peripheral surface 302.

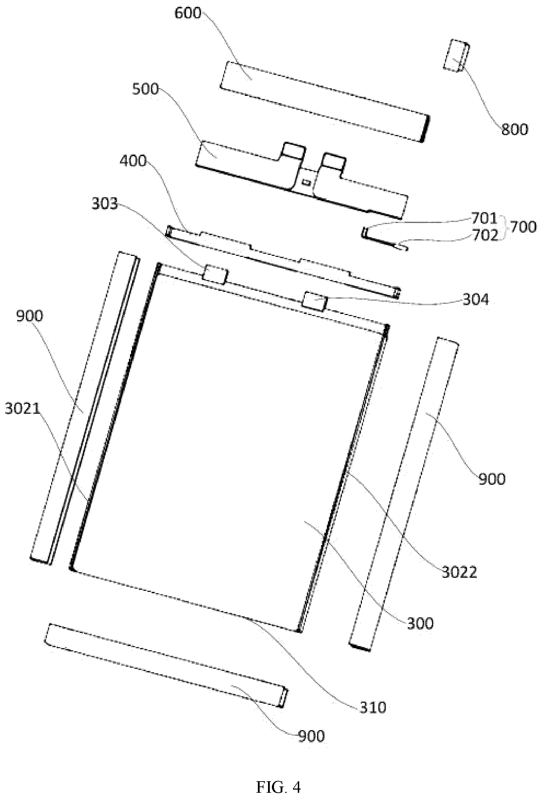

Please refer to FIG. 4, which is a schematic structural diagram of the battery. In the embodiment of the present application, the packaging structure may further include a connecting glue layer 900, and the connecting glue layer 900 may be arranged between the bonding area 220 of the second packaging sheet 200 and the second peripheral surface 302, that is, between the bonding area 220 of the second packaging sheet 200 and the left peripheral surface 3021, and between the bonding area 220 of the second packaging sheet 200 and the right peripheral surface 3022, so as to ensure that the second packaging sheet 200 can be firmly bonded to the periphery of the battery cell 300.

In the above embodiment of the present application, the connecting glue layer 900 may also be arranged between the second packaging sheet 200 and the third peripheral surface 310 to ensure that the second packaging sheet 200 can be firmly bonded to the periphery of the battery cell 300.

Please continue to refer to FIG. 3 and FIG. 4, in the embodiment of the present application, the battery may also include a battery cell insulating glue layer 400, a battery cell protection plate 500 and a heat dissipation glue layer 600, which are all located between the first peripheral surface 301 and the first packaging sheet 100. The battery cell insulating glue layer 400 is attached to the first peripheral surface 301, and the battery cell insulating glue layer 400 is arranged with a third through hole 401 and a fourth through hole 402. The third through hole 401 is configured to match the positive tab 303, and the fourth through hole 402 is configured to match the negative tab 304. When the battery cell insulating glue layer 400 is attached towards the first peripheral surface 301 of the battery cell 300, the positive tab 303 passes through the battery cell insulating glue layer 400 via the third through hole 401, and the negative tab 304 passes through the battery cell insulating glue layer 400 via the fourth through hole 402. At the same time, the hole wall of the third through hole 401 will be in contact with and bonded to the positive tab insulating glue layer 305, and the hole wall of the fourth through hole 402 will be in contact with and bonded to the negative tab insulating glue layer 306.

The heat dissipation glue layer 600 is attached to the battery cell protection plate 500, and the battery cell protection plate 500 is located between the battery cell insulating glue layer 400 and the heat dissipation glue layer 600; the positive electrode of the battery cell protection plate 500 is electrically connected to the positive tab 303, and the negative electrode of the battery cell protection plate 500 is electrically connected to the negative tab 304.

In the embodiment of the present application, the battery may further include a temperature detection element 700, one end of the temperature detection element 700 is welded to the battery cell protection plate 500, and the other end of the temperature detection element 700 is configured to detect the temperature of the battery cell 300. Where, the temperature detection element 700 includes a connection terminal 701 and a temperature measurement terminal 702. The connection terminal 701 is welded to the connection portion of the battery cell protection plate 500. The temperature measurement terminal 702 extends to the battery cell 300 to detect the temperature of the battery cell 300.

In the above-mentioned embodiments of the present application, the temperature detection element 700 may include a negative temperature coefficient (Negative Temperature Coefficient, NTC for short) thermistor.

In the embodiment of the present application, the battery may further include a fixing glue layer 800, and the fixing glue layer 800 is connected to both the temperature detection element 700 and the battery cell insulating glue layer 400. Where, the fixing glue layer 800 is connected to both the temperature measurement terminal 702 and the battery cell insulating glue layer 400, for fixing the temperature measurement terminal 702 to prevent the temperature measurement terminal 702 from shaking, thereby ensuring measurement accuracy.

In an embodiment of the present application, the first packaging sheet 100 may include a top packaging sheet and a bottom packaging sheet, the first peripheral surface 301 includes a top peripheral surface and a bottom peripheral surface that are arranged oppositely, and the top peripheral surface is arranged with the positive tab 303, and the bottom peripheral surface is arranged with the negative tab 304. The top packaging sheet is attached to the top peripheral surface and the bottom packaging sheet is attached to the bottom peripheral surface. The non-bonding area 210 includes a first non-bonding area and a second non-bonding area, the first non-bonding area is located at an edge of the second packaging sheet 200 close to the top packaging sheet, and the second non-bonding area is located at an edge of the second packaging sheet 200 close to the bottom packaging sheet. The bonding area 220 is located between the first non-bonding area and the second non-bonding area, and both the first non-bonding area and the second non-bonding area can be close to or away from the second peripheral surface 302.

That is to say, the positive tab 303 and the negative tab 304 of the above embodiment are respectively arranged on two opposite peripheral surfaces to meet the needs of different products.

In summary, the embodiment of the present application provides a battery, which includes a battery cell 300 and a packaging structure wrapped around the periphery of the battery cell 300. Where, the first packaging sheet 100 of the packaging structure is attached to the first peripheral surface 301 of the battery cell 300, and the second packaging sheet 200 is attached to the second peripheral surface 302 of the battery cell 300. The first peripheral surface 301 intersects with the second peripheral surface 302. The first peripheral surface 301 is arranged with a positive tab 303 and a negative tab 304; the second packaging sheet 200 has a bonding area 220 and a non-bonding area 210, which are adjacent to each other. The non-bonding area 210 is located at an edge of the second packaging sheet 200 close to the first packaging sheet 100, and the non-bonding area 210 can be close to or away from the second peripheral surface 302. When the packaging of the second peripheral surface 302 and the third peripheral surface 310 is completed and the battery component is assembled towards the first peripheral surface 301, the intersection of the first peripheral surface 301 and the second peripheral surface 302 is exposed by moving the non-bonding area 210 away from the second peripheral surface 302, so that the battery component can be smoothly assembled on the first peripheral surface 301, thereby ensuring the packaging efficiency and packaging effect.

The various embodiments or implementations in this specification are described in a progressive manner. Each embodiment focuses on the differences from other embodiments, and the same or similar parts between the various embodiments can be referenced to each other.

It should be pointed out that "one embodiment", "an embodiment", "an exemplary embodiment", "some embodiments", etc., mentioned in the specification indicate that the described embodiment may include specific features, structures, or characteristics, but not every embodiment necessarily includes the specific features, structures or characteristics. Moreover, such phrases do not necessarily refer to the same embodiment. In addition, when a particular feature, structure, or characteristic is described in conjunction with an embodiment, it is within the knowledge of those skilled in the art to implement such feature, structure, or characteristic in conjunction with other embodiments whether explicitly or not explicitly described.

In general, a term should be understood at least in part by its usage in the context. For example, depending at least in part on the context, the term "one or more" as used herein may be used to describe any feature, structure, or characteristic in the singular sense or may be used to describe a combination of features, structures, or characteristics in the plural sense. Similarly, terms such as "a," "an," or "the" may also be construed to convey a singular reference or to convey a plural reference, depending at least in part on the context.

The phrases "on", "above", and "over" in this disclosure should be interpreted in the broadest sense, so that "on" not only means "directly on something", but also includes the meaning of 'on something' with an intermediate feature or layer in between; and, "above" or "over" should be understood to encompass not only the meaning of "above something" or "over something" but also the meaning of "above something" or "over something" without any intermediate features or layers in between (i.e., directly on something).

In addition, in the text, for the convenience of explanation, spatially relative terms such as "below", "under", "beneath", "above", "upper", etc., may be used to describe the relationship of a component or feature relative to other components or features as shown in the figure. Spatially relative terms are intended to encompass different orientations of the device in use or operation other than the orientation shown in the figures. The device may have other orientation (rotated 90 degrees or at other orientations), and the spatially relative descriptors used herein are interpreted accordingly.

Finally, it should be noted that the above embodiments are only used to illustrate the technical solutions of the present application, rather than limiting it. Although the present application has been described in detail with reference to the aforementioned embodiments, those skilled in the art should understand that they can still modify the technical solutions described in the aforementioned embodiments, or replace some or all of the technical features therein with equivalents. However, these modifications or replacements do not cause the essence of the corresponding technical solutions to deviate from the scope of the technical solutions of the embodiments of the present application.

## Claims

1. A battery, comprising a battery cell and a packaging structure covered around a periphery of the battery cell, wherein the packaging structure comprises a first packaging sheet and a second packaging sheet, the first packaging sheet is attached to a first peripheral surface of the battery cell, the second packaging sheet is attached to a second peripheral surface of the battery cell, the first peripheral surface intersects with the second peripheral surface, and the first peripheral surface is arranged with a positive tab and a negative tab;
the second packaging sheet has a bonding area and a non-bonding area which are adjacent to each other, and the non-bonding area is located at an edge of the second packaging sheet close to the first packaging sheet.

2. The battery according to claim 1, wherein in a direction from the second packaging sheet to the first packaging sheet, a length of the non-bonding area is 5-8 mm.

3. The battery according to claim 1, wherein in the direction from the second packaging sheet to the first packaging sheet, the second packaging sheet extends toward the first packaging sheet and extends beyond the second peripheral surface.

4. The battery according to claim 1, wherein the battery further comprises a connecting glue layer, and the connecting glue layer is arranged between the bonding area of the second packaging sheet and the second peripheral surface.

5. The battery according to claim 1, wherein the first packaging sheet is provided with a first through hole matching the positive tab, and a second through hole matching the negative tab;
a periphery of the positive tab is provided with a positive tab insulating glue layer, a periphery of the negative tab is provided with a negative tab insulating glue layer, the positive tab insulating glue layer is in contact with a hole wall of the first through hole, and the negative tab insulating glue layer is in contact with a hole wall of the second through hole.

6. The battery according to claim 1, wherein the battery comprises a battery cell insulating glue layer, a battery cell protection plate and a heat dissipation glue layer, the battery cell insulating glue layer, the battery cell protection plate and the heat dissipation glue layer are all located between the first peripheral surface and the first packaging sheet, the battery cell insulating glue layer is attached to the first peripheral surface, the heat dissipation glue layer is attached to the battery cell protection plate, and the battery cell protection plate is located between the battery cell insulating glue layer and the heat dissipation glue layer;
a positive electrode of the battery cell protection plate is electrically connected to the positive tab, and a negative electrode of the battery cell protection plate is electrically connected to the negative tab.

7. The battery according to claim 6, wherein the battery comprises a temperature detection element, one end of the temperature detection element is welded to the battery cell protection plate, and the other end of the temperature detection element is configured to detect a temperature of the battery cell.

8. The battery according to claim 7, wherein the temperature detection element comprises a negative temperature coefficient thermistor.

9. The battery according to claim 7, wherein the battery comprises a fixing glue layer, and the fixing glue layer is connected to both the temperature detection element and the battery cell insulating glue layer.

10. The battery according to claim 1, wherein the first packaging sheet comprises a top packaging sheet and a bottom packaging sheet, the first peripheral surface comprises a top peripheral surface and a bottom peripheral surface that are arranged oppositely, and the top peripheral surface is arranged with the positive tab, and the bottom peripheral surface is arranged with the negative tab;
the top packaging sheet is attached to the top peripheral surface, and the bottom packaging sheet is attached to the bottom peripheral surface;
the non-bonding area comprises a first non-bonding area and a second non-bonding area, the first non-bonding area is located at an edge of the second packaging sheet close to the top packaging sheet, the second non-bonding area is located at an edge of the second packaging sheet close to the bottom packaging sheet, and the bonding area is located between the first non-bonding area and the second non-bonding area.
